# EUROPÄISCHE PATENTSCHRIFT

(11) **EP 4 007 666 B1**
(45) Veröffentlichungstag und Bekanntmachung des Hinweises auf die Patenterteilung: **30.08.2023**
(21) Anmeldenummer: 20747354.7
(22) Anmeldetag: 22.07.2020
(51) Int. Cl.: B21K 1/22, B23P 15/00, F01L 3/14, B21J 5/12

(54) **VERFAHREN UND VORRICHTUNG ZUM HERSTELLEN VON HOHLEN, INNENGEKÜHLTEN VENTILEN**
METHOD AND DEVICE FOR MANUFACTURING HOLLOW, INTERNALLY COOLED VALVES
PROCÉDÉ ET DISPOSITIF DE FABRICATION DE VANNES CREUSES ET INTÉRIEUREMENT REFROIDIES

(30) Priorität: 27.11.2019 DE 102019132085
(43) Veröffentlichungstag der Anmeldung: 08.06.2022
(73) Patentinhaber: Federal-Mogul Valvetrain GmbH, 30890 Barsinghausen (DE)
(72) Erfinder: MATTHIAS, Thorsten, 30826 Garbsen (DE); SCHOBER, Dirk, 31311 Uetze (DE)
(74) Vertreter: Kurig, Thomas
(86) Internationale Anmeldenummer: PCT/EP2020/070669
(87) Internationale Veröffentlichungsnummer: WO 2021/104688

(56) Entgegenhaltungen:
- DE-A1-102016 014 769
- DE-A1-102017 114 509
- DE-B3-102018 100 413
- JP-A- 2014 084 725
- US-A- 2 411 734
- US-A- 4 733 698

## Beschreibung

Die vorliegende Erfindung betrifft ein Verfahren zum Herstellen von hohlen, innengekühlten Ventilen. Die Erfindung betrifft insbesondere das Herstellen von Ventilrohlingen aus Ventilvorformlingen.

Ventilrohlinge weisen im allgemein die Form eines fertigen Ventils insbesondere eines Tellerventils eines Verbrennungsmotors auf. Ventilrohlinge können noch Nachbearbeitungs-Schritte, wie Füllen mit einem Kühlmittel, z. B. Natrium sowie ein Verschließen oder eine Oberflächen-Nachbearbeitung erfordern.

Das vorliegende Verfahren nutzt dabei ein verjüngen des Querschnitts zumindest des Schaftabschnitts, um gegen einen späteren Ventiltellerabschnitt aus einem relativ kurzen Rohransatz, mit einem großen Durchmesser einen relativ langen Ventilschaft mit einem relativ kleinen Durchmesser zu bilden. Hier und im Folgenden wird der Begriff "Verjüngen" für ein umformendes Verfahren verwendet, bei dem ein Durchmesser eines hohlen Schafts verringert wird und gleichzeitig eine Länge des Schafts in einer Axialrichtung erhöht wird. Zum Verjüngen wird hier beispielsweise jedes Fertigungsverfahren zur Verringerung von Querschnitten von massiven oder hohlen Werkstücken gerechnet. Das Verjüngen kann hier mittels einer Matrize als "Necking" ausgeführt werden. Das Verjüngen kann ebenfalls als Querwalzen und zwar als Quer-Rundwalzen oder Quer-Keilwalzen ausgeführt werden. Das Verjüngen kann ebenfalls als Form-Längswalzen beispielsweise im Pilgerschrittverfahren ausgeführt werden. Das Verjüngen kann ebenfalls mittels Hämmern oder Rundkneten durchgeführt werden. Das Verjüngen kann ebenfalls ein Durchdrücken bezeichnen, das wiederum zum Druckumformen zählt. Hier wird nur ein Teil eines Ventil-Vorfomlings verjüngt. Der Ausdruck "Verjüngen" wird hier und im Folgenden im Sinne eines Umformens eines Rohransatzes eines Ventilvorformlings verwendet.

Aufgrund der verschiedenen Verfahren, die als Verjüngen bezeichnet werden können, wird darauf im Folgenden nicht mehr explizit eingegangen.

Die vorliegende Erfindung betrifft ein Verfahren zum Herstellen von Ventilen bzw. Ventilrohlingen.

Eine Möglichkeit, einen Schaft eines Hohlventils innen mit einer Struktur zu versehen, ist bereits bekannt und wird vor allem bei mehrteiligen Ventilen angewendet. Dabei wurden bisher hauptsächlich Räumnadeln verwendet, um eine gleichmäßige Struktur in einen hohlen Schaft zu schneiden. Räumnadeln können jedoch nicht bei einteiligen Ventilen eingesetzt werden, da eine Räumnadel üblicherweise vollständig durch ein Werkstück gezogen wird. Dies ist bei Ventilen, die einstückig sind, nicht möglich.

Aus der deutschen Patentschrift DE 10 2018 100413 B3 ist bereits bekannt eine Matrize zum Umformen eines Ventilvorformlings zu verwenden, um einen Ventilschaft zu verjüngen.

Die deutsche Patentanmeldung DE 10 2017 114509 A1 offenbart ein Verfahren zur Herstellung von Hohlraumventilen für Verbrennungsmotoren mit optimierter Schaftinnenfläche, die mit einer oberflächenvergrößernden Strukturierung versehen ist, um eine verbesserte Kühlung zu erreichen.

Das japanische Patendokument JP 2014 084725 A offenbart ein Verfahren, um eine Innenseite eines Hohlventils mit einer Oberflächenstrukturierung zu versehen, wobei das Verfahren zum Verjüngen eines Ventilschafts ein Rundknetverfahren einsetzt.

Das japanische Patendokument mit der Veröffentlichungsnummer US 2 411 734 A betrifft ein Hohlventil mit einem durch Kaltschmieden verjüngten Ventilschaft. Dabei kann gemäß der US 2 411 734 A das Verjüngen mit einem strukturierten Dorn erfolgen, sodass sich eine Oberflächenstruktur des Dorns innen in dem Ventilschaft abdrückt.

Die deutsche Patenanmeldung mit der Nummer DE 10 2016 014769 A1 zeigt ein Ein- oder Auslassventil für eine Verbrennungskraftmaschine mit einem Hohlraum, der sich über einen Schaftbereich und einen Tellerbereich erstreckt, wobei wenigstens eine Innenwand des Schaftbereichs oder des Tellerbereichs Rippen aufweist.

Bisher sind innengekühlte Ventile bekannt, bei denen der Ventilteller und der Schaft aus einem napfförmigen Vorformling durch Umformen hergestellt sind.

Es ist daher wünschenswert ein innengekühltes Ventil zu haben, das einstückig ausgeführt ist und das eine Strukturierung in dem Hohlraum und insbesondere im Schaft aufweist.

Gemäß Anspruch 1 wird ein Verfahren zum Umformen eines hohlen Ventilvorformlings bereitgestellt. Das Verfahren umfasst ein Bereitstellen eines Ventilvorformlings, der einen Kopfabschnitt und einen hohlen Schaftabschnitt mit einem Hohlraum umfasst. Der Schaftabschnitt umfasst einen Ausgangs-Außendurchmesser und einen Innendurchmesser. Weiterhin wird in dem Verfahren eine Strukturierbirne an einer Zugstange in den Hohlraum eingeführt. Die Strukturierbirne weist einen Außendurchmesser auf, und ist mit einer Außenstrukturierung versehen. In einem nächsten Schritt wird der hohle Schaftabschnitt umgeformt, wobei zumindest ein Teil eines Innendurchmessers des Hohlraums unter den Außendurchmesser der Strukturierbirne verringert wird. Nach dem Umformen des Schaftabschnitts wird die Strukturierbirne durch den umgeformten Schaftabschnitt herausgezogen. Beim Herausziehen wird die Außenstrukturierung zumindest teilweise in die Oberfläche des Hohlraums eingepresst.

Durch das Umformen wird der hohle Schaftabschnitt verlängert und der Innendurchmesser in einem Bereich, in dem sich die Strukturierbirne nicht befindet, verringert. Durch das Umformen wird zumindest ein Teil eines Innendurchmessers des Hohlraums unter den Außendurchmesser der Strukturierbirne verringert. Dadurch wird die Kalibrierbirne durch Formschluss in dem Hohlraum gefangen. Die Strukturierbirne wird dann in Axialrichtung aus dem Schaft gezogen und dabei wird der Schaft innen wiederum umgeformt, wobei sich die Außenstruktur als negativ innen in der Kalibierbirne abdrückt.

Die Außenstrukturierung erstreckt sich in Umfangsrichtung um die Strukturierbirne, sodass nach einem Durchziehen der Strukturierbirne durch den Schaft im Schaft in Umfangsrichtung eine Variation im Radius vorliegt. Die abgeformte Struktur der Strukturierbirne erzeugt Strukturen, die sich in Axialrichtung oder in einer Helix-Richtung erstrecken. Der Außendurchmesser RA der strukturierten Strukturierbirne wird im Folgenden als Zugmaß bezeichnet. Der kleinste Durchmesser (bzw. das Doppelte des kleinsten Radius) der strukturierten Strukturierbirne wird im Folgenden als Feldmaß bezeichnet. Nach dem Durchziehen liegt in der strukturierten Strukturierbirne die Struktur innen in dem hohlen Schaft abgedrückt bzw. abgeformt vor. Im Folgenden werden die Begriffe Zugmaß und Feldmaß analog zu der Fertigung von Schusswaffenläufen verwendet, wobei das Zugmaß immer größer als das Feldmaß ist. Diese beiden Maße betreffen jeweils immer das Doppelte des Zugmaßradius bzw. Feldmaßradius, und nicht unbedingt einen Durchmesser der strukturierten Strukturierbirne. Das Strukturieren des Hohlraums stellt erfindungsgemäß ein Druckumformen dar. Die Bezeichnungen Zugmaß und Feldmaß werden nach einem Durchziehen der strukturierten Strukturierbirne für den Hohlraum und die Strukturierbirne gleichgesetzt, wobei ein Anteil einer elastischen Verformung vernachlässigt wird.

Beim Umformen des Schaftabschnitts wird der Innendurchmesser des Schaftabschnitts unter das Zugmaß der strukturierten Strukturierbirne verringert. Wird nun die strukturierte Strukturierbime aus dem Hohlraum herausgezogen, wird mindestens der Innendurchmesser des Schaftabschnitts auf das Zugmaß erweitert. Beim Herausziehen der Strukturierbirne wird Material von dem Bereich der Züge zu einem Bereich der Felder verdrängt.

Die Verdrängung findet hauptsächlich in Umfangsrichtung statt. Die Zugkraft ist dabei durch den Querschnitt der Zugstange beschränkt. Die Zugkraft beschränkt die Anzahl, Form und radiale Tiefe der Züge.

Das Herausziehen kann frei erfolgen, oder in einem Zustand bei dem der Schaftabschnitt von außen abgestützt wird, um zu verhindern dass der Schaft nach dem verjüngenden Umformen im Durchmesser wieder vergrößert wird. Je nach Struktur und je nach der Strukturhöhe (was der Hälfte der Differenz von Zugmaß und Feldmaß entspricht) kann es sinnvoll sein den Schaft nach außen abzustützen oder nicht.

Gemäß einer anderen Ausführungsform des Verfahrens weist die Strukturierbirne eine wendelförmige Außenstrukturierung auf. Bei diesem Verfahren findet eine relative Drehung zwischen der Strukturierbirne und dem Schaftabschnitt beim Herausziehen durch den umgeformten Schaftabschnitt statt. Die relative Drehung kann durch eine drehbare oder angetriebene Zugstange verwirklicht werden. Es ist jedoch ebenfalls möglich die Zugstange festzuhalten und den umgeformten Schaftabschnitt beim Herausziehen zu drehen.

Diese Ausführung ermöglicht es anstelle von nur in Axialrichtung verlaufenden Innenstrukturen auch Strukturen in den Ventilschaft einzubringen, die eine Helix oder Mehrfachhelix bilden.

Bei einer weiteren Ausführungsform des Verfahrens kann dies weiter ein Wiederholen der Schritte des Einführens, Umformens, und Herausziehens mit unterschiedlichen Strukturierbirnen umfassen. Die Strukturierbirnen umfassen jeweils einen abnehmenden Außendurchmesser bzw. ein abnehmendes Zugmaß. Der Schaft wird bei jedem Umformen verjüngt, wobei ebenfalls der Innendurchmesser des Schaftes verringert wird. Im Idealfall bleibt die Strukturhöhe (entsprechend der Differenz aus Zugradius und Feldradius) gleich oder verändert sich nur gering. Bei einem zweiten oder weiteren Kalibrieren mit der Strukturierbirne kann dann jeweils eine kleinere Strukturierbirne verwendet werden, da der Schaftdurchmesser und damit der Innendurchmesser des Hohlraum immer weiter abnimmt. Bei diesem Verfahren sollte darauf geachtet werden, dass bei einem weiteren Innenkalibrieren jeweils die Struktur der Strukturierbirne mit einer bereits in dem Schafthohlraum vorhandenen Struktur ausgerichtet wird. Durch das Ausrichten kann verhindert werden, dass die Strukturierbirne von der Zugstange abreißt.

Bei einer weiteren Ausführungsform des Verfahrens weisen nacheinander verwendete Strukturierbirnen jeweils eine ansteigende Strukturhöhe bzw. Außenstrukturierungstiefe auf. Die Strukturhöhe sollte bei jedem Durchziehen der Strukturierbirne erhöht werden. Jeder Durchgang eines Herausziehens der Strukturierbirne ermöglicht nur eine begrenzte Strukturhöhe, da die Zugkraft der Zugstange durch ihre Abmessungen begrenzt ist. Bei zwei aufeinanderfolgenden Vorgängen sollte daher darauf geachtet werden, dass die Strukturhöhe jeweils erhöht wird.

Bei einer zusätzlichen Ausführungsform umfasst das Verfahren Strukturierbirnen, die eine wendelförmige Außenstrukturierung mit aufeinander folgend ansteigender Steigung aufweisen. Beim Umformen und Verjüngen des Ventilschafts erhöht sich dessen Länge. Die Anzahl der Windungen der von innen eingedrückten helixförmigen Struktur ändert sich jedoch nicht. Daraus ergibt sich bei jedem Verjüngungsvorgang eine Erhöhung der Steigung einer innen eingedrückten helixförmigen Struktur. Um die Struktur jeweils weiter zu vertiefen, muss die Steigung von nacheinander eingesetzten strukturierten Strukturierbirnen immer weiter erhöht werden. Diese Ausführungsform betrifft ein Verfahren bei dem mehrere strukturierte Strukturierbirnen nacheinander durch den Schaft gezogen werden, wobei immer eine höhere bzw. tiefere Struktur verwendet wird, um eine bestehende Struktur immer weiter auszubauen.

Bei einer zusätzlichen Ausführungsform des Verfahrens, werden abwechselnd Strukturierbirnen mit rechtsgängiger und linksgängiger, wendelförmiger Außenstrukturierung verwendet. Diese Ausführung nutzt das Verfahren und die helixförmigen Strukturen, um rautenförmige Kühlrippen innen in dem Hohlraum zu erzeugen. Dabei wird ausgenutzt, dass der Schaft von einem napfförmigen Rohling oder Vorformling aus umgeformt wird, wobei der Schaft am Anfang einen großen Innendurchmesser und eine geringe Länge aufweist. Hier wird dann anfangs die Strukturierbirne beim Herausziehen um die Axialrichtung gedreht. Dabei weisen die Strukturierbirnen anfangs eine geringe Steigung auf. Die zweite Strukturierbirne weist eine gegensätzliche Steigung auf, die sich zudem von der ersten unterscheiden kann. Da die ersten Strukturierbirnen von kurzen und dicken Zugstangen getragen werden und die Strukturhöhe jeweils nur relativ gering ausfällt, können die ersten Züge beispielsweise rechtsgängig eingepresst werden, und in einem zweiten Durchgang werden Züge linksgängig eingepresst, sodass die Felder ein Rautenmuster bilden. In jedem weiteren Schritt werden die sich kreuzenden Züge vertieft, und da die Züge immer tiefer werden, können sie die jeweilige Strukturierbirne auch immer besser über die jeweils anders gewundenen Züge leiten. Hier presst sich der jeweils zweite Satz von Strukturierbirnen vornehmlich durch die Felder der ersten und vertieft die Züge lediglich in geringem Maß. Aus dem Verfahren ergeben sich Züge mit recht und Linksdrall in dem Schaft, die sich zudem noch kreuzen. Ein derartiges Verfahren ist aus dem Bereich der Läufe von Schusswaffen nicht abzuleiten, da dort die Züge nur in einer Richtung sinnvoll sind. Die erste Strukturierbirne drückt einen ersten Satz Züge innen in den Schaft, die zweite Strukturierbirne drückt in einem Winkel dazu einen zweiten Satz Züge innen in den Schaft und nacheinander bildet sich ein Gitter aus Zügen und ein Rautenmuster aus Feldern in dem Schaft.

Bei einer zusätzlichen Ausführungsform des Verfahrens werden die Strukturierbirnen vor dem Herausziehen zu bereits vorhandenen Zügen bzw. Feldern in dem Schaft ausgerichtet. Dies kann über jeweilige Winkelsensoren an dem Werkstück und der Strukturierbirne bzw. der Zugstange erfolgen, Es ist ebenfalls vorgesehen, dass die Struktur der Strukturierbirne Führungskomponenten wie Führungsschrägen oder -kegel aufweist, damit sich die Birne zum Teil selber an den vorhandenen Zügen ausrichten kann. Es ist ebenfalls möglich die Birne anhand von Kraftsensoren auszurichten, die die Kraft messen, mit der die Strukturierbirne und der Ventilschaft gegeneinander verdreht werden, während die Strukturierbirne langsam in Axialrichtung bewegt wird. Dann sollte die Struktur der aktuellen Strukturierbirne irgendwann in die vorhandenen Züge eingreifen und einer Verdrehung einen höheren Widerstand entgegensetzen. Wenn dann die Drehrichtung umgekehrt wird, kann man aus einem nächsten Anstieg des Widerstands ebenfalls einen Eingriff ermitteln und die Strukturierbirne genau mittig zwischen den Anstiegen ausrichten.

Bei einer weiteren beispielhaften Ausführungsform des Verfahrens umfasst dies den Einsatz einer Zugvorrichtung, wobei eine Zugvorrichtungssteuerung, die Zugvorrichtung so steuert, dass die Strukturierbirne mit einer oszillierender Kraft durch den Schaftabschnitt gezogen wird. Es ist ebenfalls vorgesehen, dass die Strukturierbirne in mehreren Schritten aus dem Ventilschaft gezogen wird. Das Verfahren soll dabei einem Stick-Slip-Effekt vorbeugen, in dem die Strukturierbirnen mit wechselnder Kraft aus dem Schaft gezogen werden, bevor es zu einer erhöhten Haftreibung zwischen Teilen des Vorformlings und der Strukturierbirne kommen kann. Es kann zusätzlich eine Schwingungsüberlagerung im Hauptkraftfluss während des Ziehens eingesetzt werden, wobei eine mechanische Schwingungsanregung (z.B. pneumatische Vibratoren bzw. Klopfer, z.B. hydraulische Systeme) oder elektromagnetische Systeme (Zebu Piezoaktoren, magnetostriktive Erreger) der Zugkraft überlagert werden. Eine Schwingungsüberlagerung kann ebenso mit einer Ultraschallschwingung erzeugt werden. Die Frequenzen und Amplituden sind dabei stark abhängig von dem gewählten Antrieb. Die Frequenz kann daher zwischen 2 Hz - 50 kHz und die Amplitude von 1µm-2mm betragen.

Gemäß einem weiteren Aspekt wird ein Ventilrohling oder Ventil bereitgestellt, das mit einem der vorstehend beschriebenen Verfahren hergestellt wurde. Ein solches Ventil weist dabei umgeformte Innenstrukturen auf die entweder nur in Axialrichtung oder in einer oder zwei Helix-Richtungen verlaufen.

Gemäß einer beispielhaften Ausführung des Ventils ist ein hohler Schaft des Ventils mit Zügen versehen. Die Innenstruktur verläuft dabei in einer Helix oder einem Wendel des hohlen Schafts. Durch die Schraubenform wird eine Oberfläche gegenüber einer rein in Axialrichtung verlaufenden Strukturierung erhöht. Zudem ist eine wendelförmige Strukturierung weniger anfällig gegenüber einer Druckbelastung in Radialrichtung.

Gemäß einer weiteren beispielhaften Ausführung des Ventils ist der hohle Schaft des Ventils mit gegenläufigen Zügen versehen. Diese werden nach dem vorstehend beschriebenen Verfahren hergestellt und ermöglichen ein besonders gutes Strömungsverhalten des Kühlmittels da Gasanteile in dem Hohlraum bei einer Bewegung des Kühlmittels im Bereich der Züge an diesem vorbeiströmen können.

In folgenden wird die vorliegende Erfindung anhand von schematischen Darstellungen von beispielhaften Ausführungsformen beschrieben.

Die Figuren 1A bis 1H veranschaulichen ein herkömmliches Verfahren zum Umformen eines Ventilvorformlings zu einem Ventilrohling.

Die Figuren 2A bis 2F veranschaulicht ein erfindungsgemäßes Verfahrens zum Umformen eines Ventilvorformlings zu einem Ventilrohling, wobei innen in einem Ventilschaft eine Strukturierung angebracht wird.

Die Figuren 4A bis 4H stellen ein weiteres abgewandeltes erfindungsgemäßes Verfahren dar bei dem eine Innen-Strukturierung in Form einer Helix geformt wird, wobei als Verjüngungsverfahren Rundkneten angewendet wird.

Die Figuren 5A bis 5G stellt ein weiteres abgewandeltes erfindungsgemäßes Verfahren dar bei dem eine Innen-Strukturierung in Form zweier sich kreuzender Helices geformt wird, wobei als Verjüngungsverfahren rundwalzen verwendet wird.

Die Figur 6 zeigt eine Reihe von Querschnitten von Strukturierbirnen nach jedem Verjüngungsvorgang.

Im Folgenden werden sowohl in der Beschreibung als auch in den Figuren gleiche oder ähnliche Bezugszeichen, für gleiche oder ähnlichen Elemente und Komponenten verwendet.

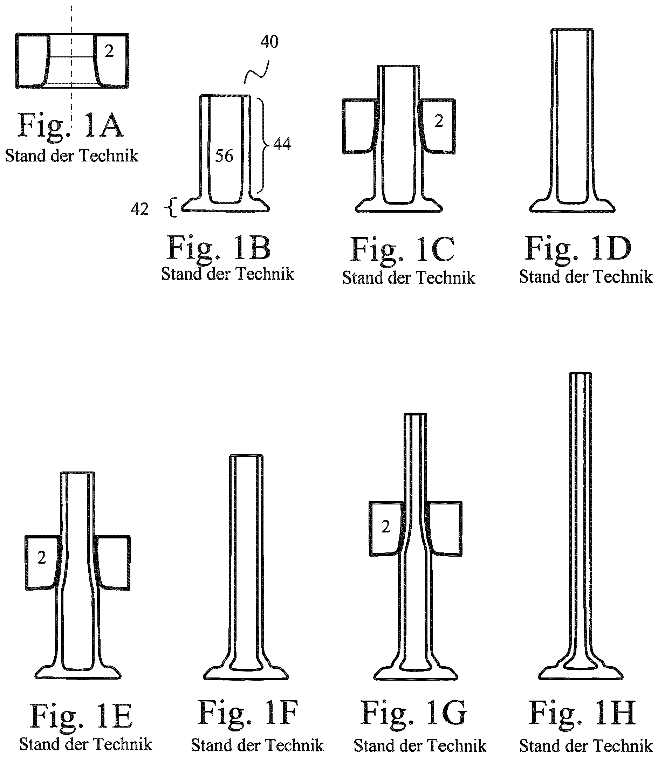

Die Figur 1A zeigt eine einstufige Matrize 2 zur Verjüngung eines Schaftabschnitts eines Ventilvorformlings. Die Matrize 2 umfasst dabei eine im Querschnitt runde Durchgangsöffnung. Die Durchgangsöffnung umfasst dabei einen Reduzierkegel-Abschnitt, in dem sich die Durchgangsöffnung von einem Eingangsdurchmesser verjüngt.

Die Matrize bildet in der vorliegenden Ausführung im Wesentlichen einen Ziehstein wie er aus dem Umformverfahren des Drahtziehens bekannt ist. Im Gegensatz zum Drahtziehen ist die Matrize jedoch dazu bestimmt, dass ein Schaftabschnitt eines Ventilvorformlings von außen bzw. von unten in die Matrize eingepresst wird. Dadurch liegt eine vollständig andere Belastungslage vor.

Die Figuren 1B bis 1H stellen einzelne Schritte eines Verfahrens zum Umformen eines Ventilvorformlings 40 zu einem Ventilrohling 46 dar. Der Ventilvorformling 40 umfasst dabei einen Tellerabschnitt 42, der auch Kopfabschnitt genannt wird, und einen Schaftabschnitt 44, dessen Material später einen Ventilschaft bildet. In dem Schaftabschnitt ist ein Hohlraum 26 angeordnet, der von einem Ende des Schaftabschnitt 44 in Richtung des Tellerabschnitts 42 verläuft. Ein Aspekt der Erfindung besteht darin, dass der Hohlraum 56 im Bereich des Tellerabschnitts 42 einen Radius aufweist, der größer ist als der eines Schaftes des späteren Ventils. Damit lässt sich relativ einfach ein Hohlraum 56 in einem Ventil herstellen, der im Kopf des Ventils einen größeren Durchmesser aufweist, als es sich durch eine spanende Fertigung erzielen ließe. Der Schaftabschnitt 44 des Ventil-Vorformling 40 weist dabei einen Ausgangs-Außendurchmesser auf, der kleiner ist als ein Eingangsdurchmesser der Matrize 2.

In der Figur 1C ist der Schaftabschnitt 44 des Ventilvorformlings 40 annähernd zur Hälfte in die Matrize 2 der Figur 1A eingepresst worden, Dabei wurde der Ausgangs-Außendurchmesser auf einen verjüngten Außendurchmesser verringert. Die Verjüngung hat jeweils den Außendurchmesser und den Innendurchmesser des Schaftabschnitts verringert, wohingegen die Länge des Schaftabschnitts durch das Umformen erhöht wurde.

In der Figur 1D wurde die Matrize 2 wieder entfernt nachdem sie bis zum Tellerabschnitt 42 bewegt wurde (bzw. der Ventilvorformling 40 bis zum Tellerabschnitt 42 in die Matrize 2 eingepresst wurde). Der einmal verjüngte Schaftabschnitt 44 des Ventilvorformlings 40 kann nun mit einer weiteren Matrize, die einen kleineren Innendurchmesser aufweist weiter verjüngt werden. Es ist möglich, den Ventilvorformling 40 einem Spannungsfreiglühen zu unterwerfen, um einen nächsten Verjüngungsschritt zu vereinfachen.

Die Figur 1E entspricht der Figur 1C, wobei lediglich eine kleinere Matrize, und der bereits einmal verformte Ventilvorformling der Figur 1D zum Einsatz kommt.

Die Figur 1F entspricht der Figur 1E, wobei der Ventilvorformling jedoch in einem zweiten Schritt umgeformt wurde.

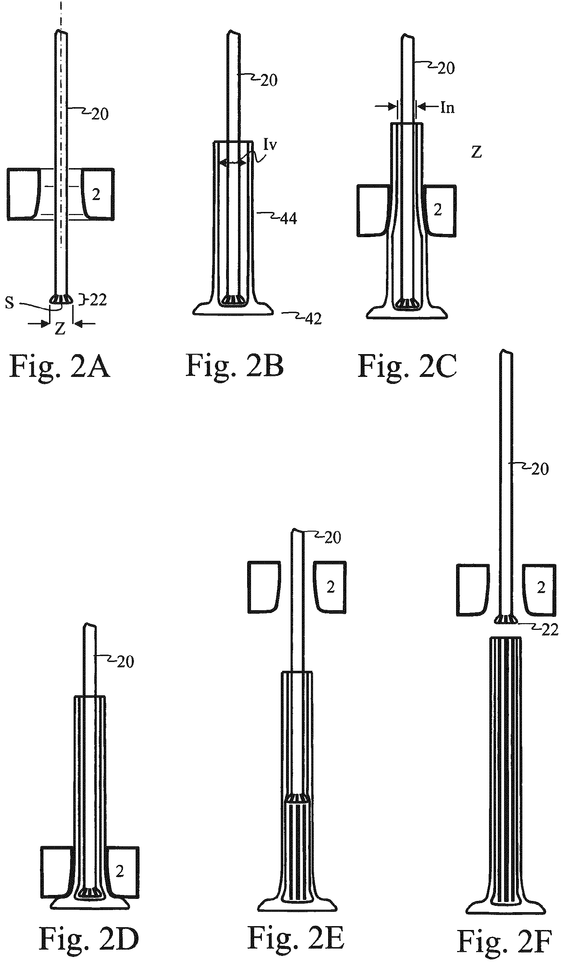

Die Figur 1G entspricht den Figuren 1C bzw. 1E, wobei lediglich eine noch kleinere Matrize, verwendet wird und der bereits zweimal verjüngte Schaftabschnitt des Ventilvorformlings der Figur 2F weiter verjüngt wird.

Die Figur 1H zeigt einen so oft umgeformten Ventilvorformling, dass dieser als Ventilrohling 46 betrachtet werden kann. Der Hohlraum 56 des Ventilrohlings 46 kann nun teilweise mit einem Kühlmittel wie Natrium gefüllt und verschlossen werden. Es ist ebenfalls möglich eine Außenfläche des Ventilrohlings spanend zu bearbeiten, um gewünschte Oberflächenqualitäten und Toleranzen zu erreichen.

Diese Verfahren weist die Gefahr auf, dass beim Einpressen der Ventilschaft einknickt oder gestaucht wird, wodurch der Ventilrohling unbrauchbar wird. Herkömmlich ergibt sich keine Möglichkeit den Hohlraum 56 innen mit einer Struktur zu versehen. Herkömmlicher Verfahren um einen Ventilrohling innen mit einer Struktur zu versehen umfassen den Einsatz von Mehrteiligen Ventilen wobei der Ventilschaft durch eine Räumnadel innen mit einer Struktur versehen werden kann. Durch den mehrteiligen Aufbau wird jedoch die Struktur des Ventils geschwächt.

Die Figuren 2A bis 2F stellen eine mögliche Umsetzung eines Verfahrens dar, um einen hohlen Schaft eines innengekühlten Ventils mit einer Struktur zu versehen. Zusätzlich zu der Matrize umfasst das Umformwerkzeug weiter eine Zugstange 20 mit einer Strukturierbirne 22 bzw. einem Zug-Knopf 22 an einem Ende. Die Strukturierbirne 22 weist dabei eine nicht runde Außenform auf. Die Strukturierbirne 22 bildet dabei zumindest Teilweise einen allgemeinen Zylinder mit einer nicht kreisförmigen Mantelfläche. Im größten Querschnitt kann die Strukturierbirne 22 beispielsweise ein Bogenpolygon oder ein Kurvenpolygon bilden.

Die Figur 2A zeigt die einstufige Matrize 2 von Figur 1A wobei weiter eine Zugstange 20 mit einer Strukturierbirne 22 an einem Ende abgebildet ist. Die Zugstange 20 wird dabei im Wesentlichen unabhängig von der Matrize 20 selbst bewegt. Die Zugstange 20 wird bei einem Einpressen des Schaftes in die Matrize 2 nicht gegenüber einem Tellerabschnitt 42 des Ventilvorformlings 40 bewegt, und dient nicht dazu einen definierten Spalt beim Einpressen zwischen der Strukturierbirne 22 und dem Reduzierabschnitt der Matrize aufrecht zu halten.

In Figur 2B wird die Zugstange 20 mit der Strukturierbirne 22 bis nach unten in den Hohlraum 56 des Ventilvorformlings 40 abgesenkt. Ein Außendurchmesser der Strukturierbirne 22 ist dabei kleiner als ein Innendurchmesser des Hohlraums 56 vor dem Umformen. Die Strukturierbirne entspricht dabei einem "umgekrempelten" Ziehstein, wie er aus dem Drahtziehen bekannt ist. Im Gegensatz zu dem Ziehstein, wird durch die Strukturierbirne nicht nur ein Innendurchmesser erhöht, sondern auch ein anfänglich runder Querschnitt zu einem nicht-runden Querschnitt umgeformt.

In den Figuren 2C und 2D wird der Schaftabschnitt 44 des Ventilvorformlings 40 in die Matrize 2 eingepresst, und die Zugstange 20 zusammen mit dem Ventilvorformlings 40 bewegt. Die Strukturierbirne 22 verbleibt beim Einpressen am Boden des Hohlraums 56.

Beim Einpressen in die Matrize wird der Innendurchmesser des Schaftabschnitts auf den verjüngten Innendurchmesser verringert. Der verjüngte Innendurchmesser ist dabei kleiner als ein maximaler Außendurchmesser der Strukturierbirne 22.

In der Figur 2E wird die Zugstange 20 durch den Schaftabschnitt und den Hohlraum 56 gezogen. Die Strukturierbirne 22 schiebt dabei Material des Schaftabschnitts vor sich her und erhöht dadurch die Länge des Schaftabschnitts. Die Struktur der Strukturierbirne 22 verdrängt Material in Umfangsrichtung wobei die Außenstruktur der Birne 22 als Innenstruktur in den vormals runden Hohlraum 56 gedrückt wird.

In der Figur 2F wird die Zugstange 20 ganz aus dem Hohlraum 56 herausgezogen. Die Innenstruktur erstreckt sich nun entlang der gesamten Länge des Schafts in Axialrichtung.

Die Strukturierbirne wird in den Hohlraum bzw. das Sackloch 56 eingeführt, wobei der Innendurchmesser Iv vor dem Verjüngen des Sacklochs bzw. Hohlraums 56 größer oder gleich dem Zugmaß Z der Strukturierbirne 22. In einem zweiten Schritt wird der Schaft 44 verjüngt, sodass ein Innendurchmesser In nach dem Verjüngen des Schafts mindestens unter dem Zugmaß Z der Kalibrierbirne 22 liegt. Es ist möglich den Innendurchmesser des Schafts bis auf das Feldmaß F oder sogar darunter zu verringern. Je nach den vorliegenden Materialeigenschaften kann es jedoch ebenfalls wünschenswert sein, dass der Innendurchmesser des Schafts nach dem Verjüngen über dem Feldmaß F der Strukturierbirne liegt.

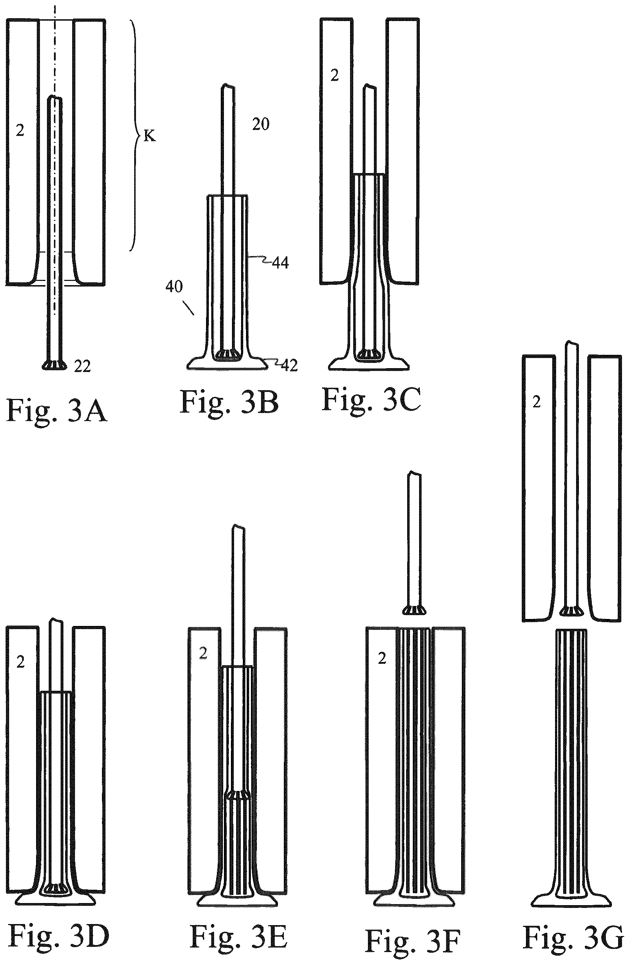

Die Figuren 3A bis 3G entsprechen im Wesentlichen den der Figuren 2A bis 2F. Im Unterscheid zu der Figur 2A weist die Matrize von Figur 3A einen langen Kalibrierabschnitt K auf, der als lange gerade Bohrung ausgeführt ist. Durch diesen Kalibrierabschnitt K wird verhindert, dass der Schaftabschnitt 44 beim Einpressen in die Matrize 2 seitlich ausweichen und sich verbiegen kann. Dadurch wird auch die Zugstange 20 geschützt.

Die Schritte 3B bis 3D entsprechen denen der Figur 2B bis 2D. Im Gegensatz zu dem Verfahren der Figuren 2A bis F wird die Matrize 2 nicht vom Schaftabschnitt abgezogen, sondern wie in Figur 3E zuerst die Zugstange 20 und damit die Strukturierbirne 22 durch den Schaftabschnitt 44 gezogen. Die Strukturierbirne 22 schiebt dabei Material des Schaftabschnitts 44 vor sich her und erhöht dadurch die Länge des Schaftabschnitts 44. Die Struktur der Strukturierbirne 22 verdrängt Material in Umfangsrichtung und Radialrichtung wobei die Außenstruktur der Birne 22 als Innenstruktur in den vormals runden Hohlraum 56 gedrückt wird. Im Gegensatz zu der Ausführung der Figuren 2A bis 3F, kann das Material des Schaftabschnitts nicht nach außen ausweichen wenn die Zugstange und die Kalibrierbirne herausgezogen werden. Dies ermöglicht eine stärkere Strukturierung des Hohlraums 56. Gleichzeitig kann dadurch die Länge des Schaftabschnitts weiter erhöht werden. Die radiale Abstützung des Schaftabschnitts beim Ziehen der Kalibrierbirne kann weiter einen Anteil von elastischen Verformungen verringern, wodurch es möglich wird eine stärkere Verformung der Oberfläche des Hohlraums 56 des Ventilschafts 44 zu erreichen. Dies ist insbesondere wichtig, da die Wandstärke von Ventilen viel geringer ist als bei Läufen von Schusswaffen, bei denen ähnliche Umformverfahren verwendet werden.

In der Figur 3F wird schließlich der verjüngte und kalibrierte Schaftabschnitt 44 des Ventilvorformlings 40 wieder ganz aus der Matrize 2 herausgezogen. Der verjüngte und kalibrierte Schaftabschnitt des Ventilvorformlings weist dabei den gleichen Außendurchmesser A auf wie ein nicht kalibrierter Schaftabschnitt. Der verjüngte und kalibrierte Schaftabschnitt des Ventilvorformlings weist dabei einen größeren kalibrierten und Strukturierten Innendurchmesser des Zugmaßes Z auf wie der nicht kalibrierte und nicht strukturierte Schaftabschnitt aus Figur 3D.

In der Figur 3H wird die Matrize 2 mit dem Kalibrierungsabschnitt K von dem Schaftabschnitt abgezogen.

In dem Verfahren der Figur 3 wird gegenüber dem Verfahren der Figur 2 die Reihenfolge, in denen die Matrize 2 und die Strukturierbirne 22 ab- bzw. herausgezogen werden, vertauscht.

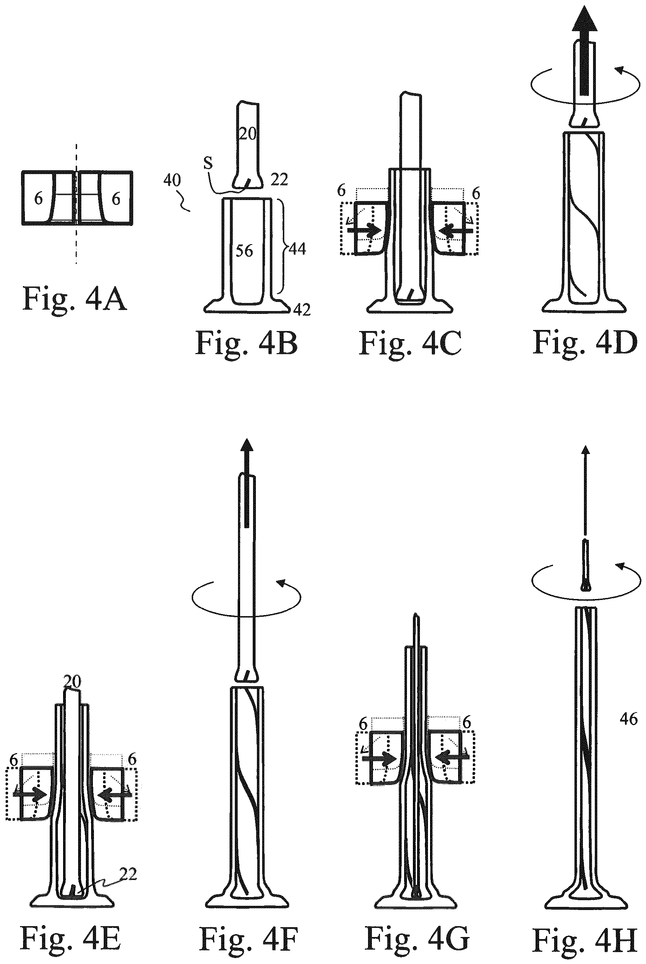

Figuren 4A bis 4H verdeutlichen ein weiteres Verfahren gemäß der vorliegenden Erfindung. Figur 4A stellt Druckstücke bzw. Hämmer 6 oder Hammerköpfe für ein Kalthämmern- oder Rundknetverfahren als Mittel zum Verjüngen des Schaftabschnitts 44 dar. Im Gegensatz zu dem Verfahren von Figur 2 wird der Schaftabschnitt 44 hier nicht mit einer Matrize sondern mit Hämmern oder Pressformen bzw. Druckstücken 6 verjüngt. Der Hauptunterschied zu der Figur 2 liegt dabei in der Bewegungsrichtung des bzw. der Verjüngungswerkzeuge.

In Figur 4A ist ein Formwerkzeug, mit Druckstücken bzw. Hämmern 6 in einem Querschnitt dargestellt. Die Druckstücke, Hämmer oder Knetbacken 6 umfassen dabei jeweils einen Winkel zwischen 90° und 120° und werden gleichzeitig oder abwechseln in Radialrichtung von außen gegen den Schaft gepresst oder geschlagen. Dabei wird der Ventilschaft 44 um seine Symmetrieachse gedreht, um eine möglichst gleichmäßig runde verjüngte Form zu erhalten.

Hier wird in der Figur 4B vor dem Verjüngen die Zugstange 20 in den Hohlraum 56 eingeführt.

Im Gegensatz zu der Zugstange 20 und der Strukturierbirne 22 der vorherigen Figuren bildet die Struktur der Strukturierbirne keinen allgemeinen Zylinder sondern eine allgemeine Helix. Dies ist durch die schräge Struktur angedeutet. Zur Klarheit wird in der Figur 4 nur zwei Züge angebracht.

In der Figur 4C wird der Schaftabschnitt durch Rundkneten verjüngt wobei die Länge des Schaftabschnitts zunimmt. Dabei wird wie vorher ein Innendurchmesser des Hohlraums 56 unter das Zugmaß Z der Strukturierbirne 22 verringert.

In der Figur 4D wird die Zugstange 20 mit der Strukturierbirne 22 aus dem Schaftabschnitt 44 herausgezogen. Dabei wird ein Zug in Form einer Helix in eine innere Mantelfläche des Hohlraums 56 eingepresst.

Hier wird in der Figur 4E wurde eine weitere zweite Zugstange 20 mit einem kleineren Durchmesser und einer weiteren kleineren Strukturierbirne 22 in den Hohlraum 56 eingeführt. Diese bildet ebenfalls eine allgemein helixförmige Struktur nur mit einem kleineren Durchmesser (Zugmaß) und einer größeren Steigung.

In der Figur 4E wird der Schaftabschnitt 44 wiederum durch Rundkneten verjüngt wobei die Länge des Schaftabschnitts 44 weiter zunimmt. Durch die weitere Zunahme steigt auch die Steigung des bereits eingeformten Zuges. Auch hier liegt nach dem Verjüngen der Innendurchmesser des Hohlraums 56 unter dem Zugmaß Z der zweiten Strukturierbirne 22.

In der Figur 4F wird die Zugstange 20 mit der zweiten Strukturierbirne 22 aus dem Schaftabschnitt 44 herausgezogen. Dabei wird der Zug in Form einer Helix in der innere Mantelfläche des Hohlraums 56 weiter vertieft.

Die Figuren 4G und 4H wiederholen die Schritte 4E und 4F ein weiteres Mal, wodurch der Schaftabschnitt 44 weiter verlängert wird, der Zug an Steigung und Tiefe gewinnt.

Die Zugkraft ist dabei durch die Länge, dem Durchmesser und den Materialeigenschaften der jeweiligen Zugstange 20 begrenzt. Die Kräfte zum Eindrücken der Züge in die Oberfläche des Hohlraums 56 hängen hingegen von den Materialeigenschaften des Schaftabschnitts, der Höhe der Struktur, der Breite des Teils der Strukur in Umfangsrichtung der eine Umformung bewirkt und dem, durch die Struktur vorgegebenen Umfang der Umformung ab. Weiter können noch die Form und die Oberflächeneigenschaften sowie eine eventuell vorhandene Schmierung und die Reibung zwischen der Strukturierbirne und dem Material des Schafabschnitts ausschlaggebend für die notwendige Umformkraft sein.

Im Allgemeinen ist die Umformkraft jedoch umso geringer, je kleiner der Umformgrad beim Durchziehen der Strukturierbirne 22 ist.

Die Figuren 4A bis 4H verdeutlichen ein mehrstufiges Verfahren zum Strukturieren eines Hohlraums 56 in einem Ventilschaft. Da der Grad der Umformung beim Durchziehen der Strukturierbirne 22 beschränkt ist, können nur mit mehreren Zugvorgängen größere bzw. höhere Strukturen erzeugt werden. Die in den Figuren 4A bis H gezeigten Prinzipien lassen sich auch auf mehr-schrittige Verfahren ausdehnen.

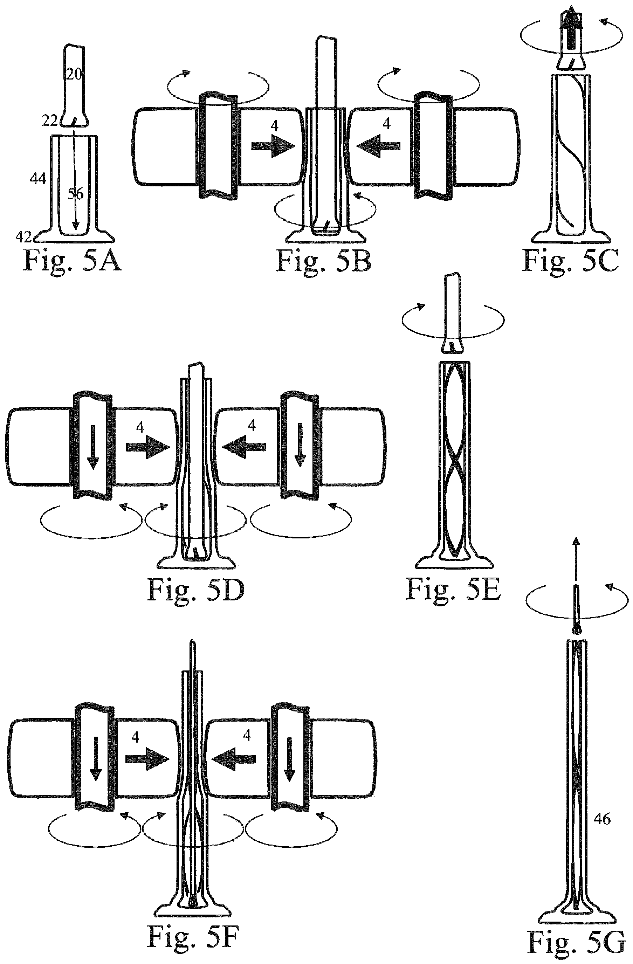

Figuren 5A bis 5G verdeutlichen ein weiteres Verfahren gemäß der vorliegenden Erfindung. Im Gegensatz zu den bereits vorgestellten Verfahren wird der Schaftabschnitt 44 hier durch Querwalzen Mit Walzrollen 4 verjüngt. Es kann ebenfalls ein Querkeilwalzen eingesetzt werden.

In Figur 5A wird vor dem Verjüngen die Zugstange 20 mit der Strukturierbirne 22 in den Hohlraum 56 eingeführt. Wie in Figur 4B bildet die Struktur der Strukturierbirne 22 eine allgemeine Helix. Zur Klarheit wird auch hier nur zwei einzelne Züge dargestellt.

In der Figur 5B wird der Schaftabschnitt durch Rundquerwalzen verjüngt wobei auch hier die Länge des Schaftabschnitts 44 zunimmt. Dabei wird wie vorher ein Innendurchmesser des Hohlraums 56 unter das Zugmaß Z der Strukturierbirne 22 verringert.

In der Figur 5C wird die Zugstange mit der Strukturierbirne 22 aus dem Schaftabschnitt 44 herausgezogen, wobei sie um ihre eigene Achse gedreht wird. Dabei werden zwei Züge in Form jeweils einer Helix in eine innere Mantelfläche des Hohlraums 56 eingepresst.

Hier wird in der Figur 5D eine zweite Zugstange 20 mit einem kleineren Durchmesser und einer kleineren Strukturierbirne 22 in den Hohlraum 56 eingeführt. Diese bildet ebenfalls eine allgemein helixförmige Struktur wobei diese Helix eine andere Richtung aufweist. Wie in Figur 4E weist die zweite Strukturierbirne 22 einem kleineren Durchmesser (Zugmaß) und eine größeren Steigung auf. In der Figur 5D wird der Schaftabschnitt wiederum durch Rundquerwalzen verjüngt wobei die Länge des Schaftabschnitts weiter zunimmt. Durch die weitere Zunahme steigt auch die Steigung des bereits eingeformten Zuges. Auch hier wird wie vorher der Innendurchmesser In des Hohlraums 56 nach dem Verjüngen unter dem Zugmaß der zweiten Strukturierbirne lieget.

In der Figur 5E wurde die zweite Zugstange 20 mit der zweiten Strukturierbirne 22 aus dem Schaftabschnitt 44 herausgezogen, wobei sie in die entgegengesetzte Richtung gedreht wurde. Dabei werden zwei weitere Züge in Form jeweils einer gegenläufigen Helix in der innere Mantelfläche des Hohlraums 56 gepresst.

Die Figuren 5F und 5G wiederholen die Schritte 5D und 5E ein weiteres Mal, jedoch in der ursprünglichen Helix-Richtung wodurch der Schaftabschnitt 44 weiter verlängert wird, die Züge an Steigung gewinnen und die ersten Züge weiter vertieft werden.

Die Ausführung von Figur 5 ermöglicht es relativ einfach eine Innenstrukturierung herzustellen, die eine große Oberfläche aufweist, und die durch ihre Struktur Hinterschneidungen ermöglicht. Gerade bei relativ schmalen Zügen und breiten Feldern können abwechselnd linke und rechte Züge in die Oberfläche gedrückt werden. Hierbei wird in jedem zweiten Durchgang hauptsächlich die Felder des vorherigen Durchgangs mit Zügen versehen. Es ist hier möglich durch abweichende Zahl von Zügen für die rechtsgewundenen Züge und die links-gewundenen Züge zu verhindern, dass die Strukturierbirne der einen Windungsrichtung in der jeweils anderen gefangen wird. Es ist beispielsweise empfehlenswert für die erste Windungsrichtung 3 Züge einzusetzen und für die zweite Windungsrichtung 4 Züge zu verwenden, sodass immer ein Großteil der Struktur nicht durch einen jeweils anders gerichteten Zug abgelenkt werden kann.

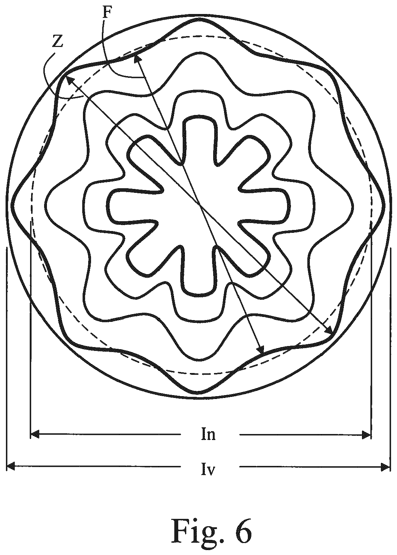

Figur 6 zeigt ein Beispiel einer Ansicht in Axialrichtung für verschiedene Strukturierbirnen 22.

Der äußere Kreis soll den Innendurchmesser Iv eines Schaftabschnitts vor einer Verjüngung darstellen. Die erste kurven-polyedrische Struktur soll dabei einen Querschnitt durch eine Strukturierbirne 22 darstellen. Das Zugmaß Z der ersten Strukturierbirne 22 ist kleiner als der Innendurchmesser Iv des Schaftabschnitts vor dem ersten Verjüngen. Der zweite, kleinere Kreis verdeutlicht den Innendurchmesser In des Schaftabschnitts nach dem ersten Verjüngen. Dieser ist hier größer als das Feldmaß F der ersten Strukturierbirne. Nach einem Durchziehen der Strukturierbirne 22 weist der Hohlraum 56 die gleiche Struktur wie die erste Strukturierbirne 22 auf. In einem weiteren Verjüngungsschritt wird diese Struktur weiter verkleinert. Die Struktur verkleinert sich nicht gleichmäßig. Beim Verjüngen werden die Züge stärker verkleinert als die Felder. Dies kann durch nachfolgende Strukturierungsbirnen ausgeglichen werden.

### Bezugszeichenliste

- 2: Matrize
- 4: Walzen
- 6: Druckstücke / Hämmer
- 20: Zugstange / Zugstab
- 22: Strukturierbirne / Zugknopf
- 40: Ventilvorformling
- 42: Kopfabschnitt
- 44: Schaftabschnitt
- 46: Ventilrohling
- 55: Hohlraum
- F: Feldmaß
- Iv: Innendurchmesser (vor dem Verjüngen)
- In: Innendurchmesser
- K: Kalibrierabschnitt
- S: Strukturierung
- Z: Zugmaß

## Patentansprüche

1. Verfahren zum Umformen eines hohlen Ventilvorformlings (40) aufweisend:
Bereitstellen eines Ventilvorformlings (40), der einen Kopfabschnitt (42) und einen hohlen Schaftabschnitt (44) mit einem Hohlraum (56) umfasst, wobei der Schaftabschnitt (44) einen Ausgangs-Außendurchmesser und einen Innendurchmesser aufweist,
Einführen einer Zugstange mit einer Strukturierbirne (22) in den Hohlraum (56), wobei die Strukturierbirne (22) einen Außendurchmesser aufweist, und eine Außenstrukturierung aufweist,
Umformen des hohlen Schaftabschnitts (44), wobei zumindest ein Teil eines Innendurchmessers des Hohlraums (56) unter den Außendurchmesser der Strukturierbirne (22) verringert wird,
Herausziehen der Strukturierbirne (22) durch den umgeformten Schaftabschnitt (44), wobei die Außenstrukturierung zumindest teilweise in die Oberfläche des Hohlraums (56) eingepresst wird.

2. Verfahren gemäß Anspruch 1, wobei die Strukturierbirne (22) eine wendelförmige Außenstrukturierung aufweist, und wobei die Strukturierbirne (22) beim Herausziehen durch den umgeformten Schaftabschnitt (44) gedreht wird.

3. Verfahren gemäß Anspruch 1 oder 2, weiter umfassend,
Wiederholen der Schritte des
- Einführens,
- Umformens, und
- Herausziehens
mit Strukturierbirnen (22), die jeweils einen abnehmenden Außendurchmesser RA aufweisen.

4. Verfahren gemäß Anspruch 3, wobei die Strukturierbirnen (22) jeweils eine ansteigende Strukturhöhe aufweisen.

5. Verfahren gemäß Anspruch 3 oder 4, wobei die Strukturierbirnen (22) eine wendelförmige Außenstrukturierung mit jeweils steigender Steigung aufweisen.

6. Verfahren gemäß Anspruch 3, wobei abwechselnd Strukturierbirnen (22) mit rechtsgängiger und linksgängiger wendelförmiger Außenstrukturierung verwendet werden.

7. Verfahren nach einem der vorstehenden Ansprüche 3 oder 4, weiter umfassend ausrichten der Strukturierbirnen (22) vor dem Schritt des Herausziehens.

8. Verfahren nach einem der vorstehenden Ansprüche, wobei eine Zugvorrichtungssteuerung, eine Zugvorrichtung so steuert, dass die Strukturierbirne mit einer oszillierender Kraft durch den Schaftabschnitt gezogen wird.

## Claims

1. A method for shaping a hollow valve preform (40) having:
providing a valve preform (40), which comprises a head portion (42) and a hollow shaft portion (44) comprising a cavity (56), wherein the shaft portion (44) has an initial outer diameter and an inner diameter,
inserting a pull rod comprising a structuring bulb (22) into the cavity (56), wherein the structuring bulb (22) has an outer diameter, and has an outer structuring,
shaping the hollow shaft portion (44), wherein at least a portion of an inner diameter of the cavity (56) is reduced below the outer diameter of the structuring bulb (22),
pulling out the structuring bulb (22) through the shaped shaft portion (44), wherein the outer structuring is at least partially pressed into the surface of the cavity (56).

2. The method according to claim 1, wherein the structuring bulb (22) has a coil-shaped outer structuring, and wherein the structuring bulb (22) is rotated through the shaped shaft portion (44) during the pull-out.

3. The method according to claim 1 or 2, further comprising,
repeating the steps of
- inserting,
- shaping, and
- pulling out
by means of structuring bulbs (22), which each have a decreasing outer diameter RA.

4. The method according to claim 3, wherein the structuring bulbs (22) each have a rising structure height.

5. The method according to claim 3 or 4, wherein the structuring bulbs (22) have a coil-shaped outer structuring each with rising pitch.

6. The method according to claim 3, wherein structuring bulbs (22) with right-handed and left-handed coil-shaped outer structuring are used alternately.

7. The method according to one of the preceding claims 3 or 4, further comprising aligning the structuring bulbs (22) prior to the step of pulling out.

8. The method according to one of the preceding claims, wherein a pulling device control controls a pulling device so that the structuring bulb is pulled through the shaft portion with an oscillating force.

## Revendications

1. Procédé de formage d'une préforme de soupape creuse (40), comprenant :
le fait de fournir une préforme de soupape (40) comprenant une partie de tête (42) et une partie de tige (44) creuse ayant une cavité (56), la partie de tige (44) ayant un diamètre extérieur et un diamètre intérieur initiaux,
le fait d'insérer une tige de traction avec un bulbe à structurer (22) dans la cavité (56), le bulbe à structurer (22) ayant un diamètre extérieur, et ayant une structuration extérieure,
le fait de déformer la partie de tige (44) creuse, au moins une partie d'un diamètre intérieur de la cavité (56) étant réduite à une dimension inférieure au diamètre extérieur du bulbe à structurer (22),
le fait d'extraire le bulbe à structurer (22) à travers la partie de tige (44) déformée, la structuration extérieure étant au moins partiellement pressée dans la surface de la cavité (56).

2. Procédé selon la revendication 1, dans lequel le bulbe à structurer (22) présente une structuration externe hélicoïdale, et dans lequel le bulbe à structurer (22) est tourné lors de son extraction à travers la partie de tige (44) déformée.

3. Procédé selon la revendication 1 ou la revendication 2, comprenant en outre,
le fait de répéter les étapes consistant à
- insérer,
- former, et
- extraire
avec des bulbes à structurer (22) ayant chacun un diamètre extérieur RA décroissant.

4. Procédé selon la revendication 3, dans lequel les bulbes à structurer (22) présentent chacun une hauteur de structure croissante.

5. Procédé selon la revendication 3 ou la revendication 4, dans lequel les bulbes à structurer (22) présentent une structuration externe hélicoïdale avec un pas croissant respectif.

6. Procédé selon la revendication 3, dans lequel on utilise en alternance des bulbes à structurer (22) ayant une structuration extérieure hélicoïdale à pas droit et à pas gauche.

7. Procédé selon l'une quelconque des revendications 3 ou 4 ci-dessus, comprenant en outre le fait d'aligner les bulbes à structurer (22) avant l'étape d'extraction.

8. Procédé selon l'une quelconque des revendications précédentes, dans lequel une commande de dispositif de traction commande un dispositif de traction de sorte que le bulbe à structurer soit tiré à travers la partie de tige avec une force oscillante.
